# EUROPÄISCHE PATENTSCHRIFT

(11) **EP 0 581 042 B1**
(45) Veröffentlichungstag und Bekanntmachung des Hinweises auf die Patenterteilung: **11.12.1996**
(21) Anmeldenummer: 93110524.1
(22) Anmeldetag: 01.07.1993
(51) Int. Cl.: F16J 15/32, F16K 41/04

(54) **Vorrichtung zum Abdichten von metallischen Wellen**
Device for sealing a metallic shaft
Dispositif pour l'étanchement d'un arbre métallique

(30) Priorität: 30.07.1992 DE 4225142
(43) Veröffentlichungstag der Anmeldung: 02.02.1994
(73) Patentinhaber: Daimler-Benz Aerospace Aktiengesellschaft, 81663 München (DE)
(72) Erfinder: Voit, Arno, D-8164 Hausham (DE); Stich, Walter, D-8160 Miesbach (DE)

(56) Entgegenhaltungen:
- EP-A- 0 184 285
- EP-A- 0 255 787
- US-A- 3 630 533
- US-A- 3 903 584

## Beschreibung

Die vorliegende Erfindung betrifft eine Vorrichtung zum Abdichten von metallischen Wellen von Kryo-Ventilen, wobei die Welle koaxial in einem zylindrischen Gehäuse in Axialrichtung verschiebbar angeordnet ist und von einer im wesentlichen ringförmigen Dichtung aus einem nicht mit Metall verklebbaren Material umgeben ist.

Bei Kryo-Ventilen, wie sie insbesondere für Raumfahrtmissionen benötigt werden, wird die Forderung aufgestellt, daß Dichtungen, insbesondere Kunststoff-Metall-Verbindungen im Temperaturbereich von 20 K < T < 350 K über viele Jahre hinweg stabil sind, d.h., daß keine Leckagen auftreten dürfen, die die Dichtwirkung negativ beeinträchtigen. Derartige Leckagen können insbesondere durch unterschiedliche Schrumpfungen von Metall und Kunststoff bei großen Temperaturänderungen auftreten. Eine im Preßsitz auf eine abzudichtende Welle aufgebrachte Kunststoffdichtung, die aus einem Material wie z.B. Reinteflon oder Vespel besteht, d.h., Materialien, die nicht mit Metallen verklebbar sind, ist in ihrer Dichtwirkung von der Umgebungstemperatur abhängig, d.h., daß bei unterschiedlich starken Schrumpfungen von Kunststoff und Metall bei niedrigen Temperaturen nur eine ungenügende Abdichtung erzielt wird.

Seit einigen Jahren sind Metallegierungen bekannt, die Formgedächtnis-Eigenschaften aufweisen und die die Eigenschaft besitzen, bei einer voraus festgelegten Temperatur ihre Abmessungen sprunghaft zu ändern. Einige dieser Legierungen weisen eine Einwegcharakteristik auf, d.h., daß sie bei Überschreiten der Sprungtemperatur die dadurch angenommene veränderte Ausdehnung bzw. Abmessung beibehalten. Andere Legierungen hingegen weisen eine reversible, d.h., eine Zweiwegcharakteristik auf, wobei beim Überschreiten bzw. beim Unterschreiten der Sprungtemperatur sich jeweils eine definierte Formänderung ergibt ("Zeitschrift für wirtschaftliche Fertigung", Heft 12, 1986, S. 703 ff.).

Von der Firma Raychem Corporation in Menlo Park, Kalifornien, USA werden Leitungskupplungen angeboten (Prospekt M1928, H 50772, Juli 1984), bei denen eine Muffe aus einer Metallegierung mit Formgedächtnis-Eigenschaften und innenliegenden Dichtschneiden die Endstücke zweier aneinanderstoßender miteinander zu verbindender Leitungen, z.B. aus Stahl umgibt, wobei die Haltekraft, die durch Schrumpfung der Muffe erzeugt wird, diejenige einer Schweissung erheblich überschreitet.

Die EP-A-255787 beschreibt eine Vorrichtung zur schnellen Verbindung eines Rohres, eines Balges oder eines Schlauches mit einem Stutzen, insbesondere in der Kraftfahrzeugtechnik, wobei der die Buchse umgebende Schlauch oder das Rohr von einem Ring aus einem Metall mit Formgedächtnis-Eigenschaften umgeben ist, der bei Anlegen eines elektrischen Stromes aufgrund der in ihm entstehenden Joule'schen Wärme seine Sprungtemperatur überschreitet und sich zusammenzieht. Der Ring drückt dabei den mit der Buchse fest zu verbindenden Abschnitt des Rohres, Balges oder Schlauches fest auf diese und behält seine Lage bei.

Aufgabe der vorliegenden Erfindung ist es, eine Vorrichtung zum Abdichten von Wellen in Kryo-Ventilen zu schaffen, die eine temperaturunabhängige Dichtwirkung über den Zeitraum von mehreren Jahren gewährleistet, unter Einsatz der an und für sich bekannten Metallegierungen mit Formgedächtnis-Eigenschaften, so daß über den Temperaturbereich von 20 K bis ca. 350 K eine hohe Vorspannung innerhalb der Vorrichtung erhalten bleibt und ein Abgleiten der Dichtvorrichtung bei Axialbewegungen der Welle mit Sicherheit vermieden wird.

Ausgehend von einer Vorrichtung der eingangs näher genannten Art wird zur Lösung dieser Aufgabe vorgeschlagen, daß die Dichtung von einem konzentrisch zur Welle angeordneten Ring aus einer Metallegierung mit Formgedächtnis-Eigenschaften und mit Einwegcharakteristik umgeben ist, dessen Innenform an die Außenform der Dichtung angepaßt ist, und dessen Kristallgefüge derart angeordnet ist, daß sich beim Überschreiten der Sprungtemperatur der Ring radial zusammenzieht und dadurch die Dichtung kraftschlüssig und formschlüssig mit einem die Welle konzentrisch umgebenden Flansch bzw. mit dem Gehäuse verbindet.

Vorteilhafterweise ist die ringförmige Dichtung mit einer koaxial zu ihrer Öffnung verlaufenden Nut versehen, in der eine, die Nut radial spreizende Feder eingelegt ist; die Feder kann dabei aus einem im Boden der Nut angeordneten Band bestehen, das mit beidseits angeordneten, im Abstand voneinander entlang der Nutenwände verlaufenden Federlaschen versehen ist.

Vorzugsweise weist der die Dichtung umgebende Ring einen im wesentlichen L-förmigen Querschnitt auf, wobei diejenige Innenwand des Ringes, die parallel zur Außenwand der Welle an der Außenwand der Dichtung anliegt, mit mehreren Dichtschneiden versehen ist.

Die Vorrichtung kann einen die Welle konzentrisch umgebenden Flansch aufweisen, der einen konzentrisch zur Welle aufragenden Kragen aufweist, der in eine angepaßte Ausnehmung in der Dichtung eingreift.

Die Außenwand des Kragens ist vorteilhafterweise mit mindestens einer Dichtschneide versehen, die, im Axialschnitt gesehen, zwischen zwei benachbarten Dichtschneiden auf der Innenwand des Ringes angeordnet ist.
Anstelle eines Flansches kann die Vorrichtung auch direkt mit einem Gehäuse verbunden sein.

Die erfindungsgemäße Vorrichtung ist einfach im Aufbau und bietet eine konstante Dichtwirkung über den gesamten Temperaturbereich von 20 K < T < 350 K unter Beibehaltung der erwünschten hohen Vorspannnung. Sie bietet ferner den Vorteil einer kostengünstigen Fertigung und ist mit wenigen Handgriffen an der entsprechend abzudichtenden Welle anzuordnen. Eine Erwärmung über die Sprungtemperatur des Materials mit Formgedächtnis-Eigenschaften mit Einwegcharakteristik bewirkt, daß sich der Ring sprunghaft zusammenzieht und die sonst mit Metall nicht verbindbare Dichtung aus Kunststoff, welche z.B. aus Reinteflon, PCTFE, FEP, PEEK, Vespel oder anderen Hochtemperatur-Thermoplasten besteht, mit enormer Kraft auf die Außenwand der zylindrischen Welle gepreßt wird.

Im folgenden wird die Erfindung anhand der Zeichnung näher erläutert, in der vorteilhafte Ausführungsbeispiele dargestellt sind. Es zeigen:
- Fig. 1: einen Schnitt durch eine erfindungsgemäße Vorrichtung im Zusammenhang mit einem Flansch und
- Fig. 2: einen Schnitt durch eine erfindungsgemäße Vorrichtung im Zusammenhang mit einer Zylindermantelfläche.

In den Figuren, in denen gleiche Teile mit gleichen Bezugszeichen versehen sind, bezeichnet 1 eine abzudichtende Welle, z.B. eine längsverschiebbar angeordnete Welle in einem Kryo-Ventil. Die Welle 1 ist dabei in einem koaxial dazu angeordneten zylindrischen Gehäuse angeordnet und wird von einer im wesentlichen ringförmigen Dichtung 3 umgeben, die aus einem mit Metall nicht verklebbaren Kunststoff besteht. Die Dichtung 3 ist vorteilhafterweise mit einer konzentrisch zur Welle 1 angeordneten Nut 4 versehen, in der eine die Nut radial spreizende Feder eingelegt ist. Diese Feder kann aus einem im Boden der Nut angeordneten Federband 5 bestehen, von dem aus sich beidseits im Abstand voneinander verlaufende Federlaschen 6,6' erstrecken, die eine erhebliche Versteifung der Dichtung 3 bei gleichzeitiger radialer Beanspruchung der der Nut benachbarten Wandteile bewirkt.

Die Dichtung 3 ist ferner mit einer Ausnehmung 7 versehen, die versetzt zur Nut 5 ebenfalls konzentrisch die Welle 1 umgibt, und in die ein Kragen 8 eines Flansches 2 eingreift, mit dem die Vorrichtung verbunden sein kann. Auf seiner der Welle 1 abgewandten Außenseite weist der Kragen 8 des Flansches 2 mindestens eine Dichtungsschneide 9 auf, die bei Verformung der Dichtung 3 in diese einschneidet.

Mit 11 ist nun ein Ring aus einer Metallegierung mit Formgedächtnis-Eigenschaften mit Einwegcharakteristik bezeichnet, dessen Innenform an die Außenform der Dichtung 3 angepaßt ist und der diese Dichtung umgibt, wobei das Kristallgefüge des Ringes 11 derart angeordnet ist, daß sich bei Überschreiten der Sprungtemperatur der Ring 11 radial zusammenzieht und dadurch die Dichtung 3 kraftschlüssig und formschlüssig mit dem Flansch 2 bzw. dem Gehäuse verbindet.

Der Ring 11 weist, wie die beiden Figuren erkennen lassen, einen im wesentlichen L-förmigen Querschnitt auf, wobei der Längsträger des L parallel zur Achse der Welle 1 verläuft; die Innenwand des Ringes 11, die an der Außenwand der Dichtung 3 anliegt, ist dabei mit mehreren Dichtschneiden 12,13 versehen, die bei Schrumpfung des Ringes 11 in das weichere Material der aus Kunststoff bestehenden Dichtung 3 eindringen und diese fixieren. Eine weitere Fixierung erfolgt durch das Eindringen der Dichtschneide 9 an der Außenwand des Kragens 8 des Flansches 2.

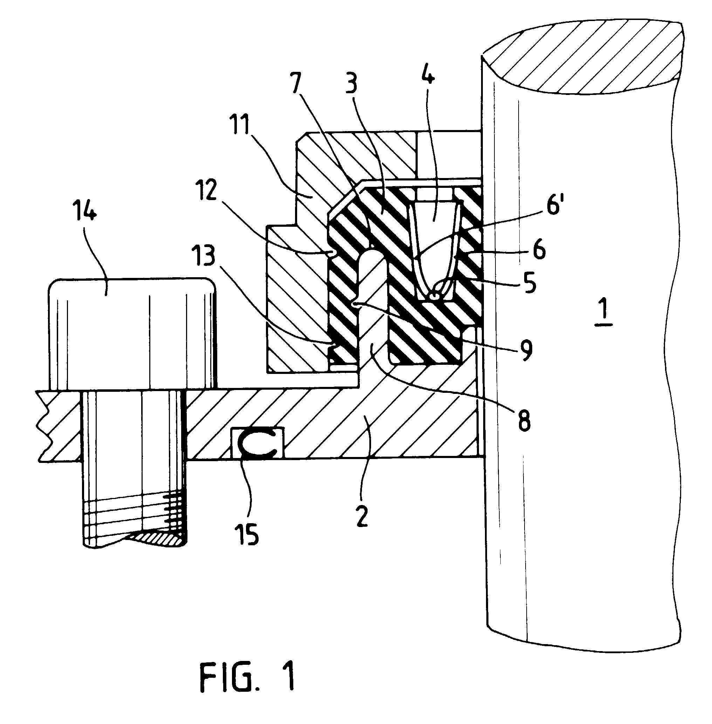

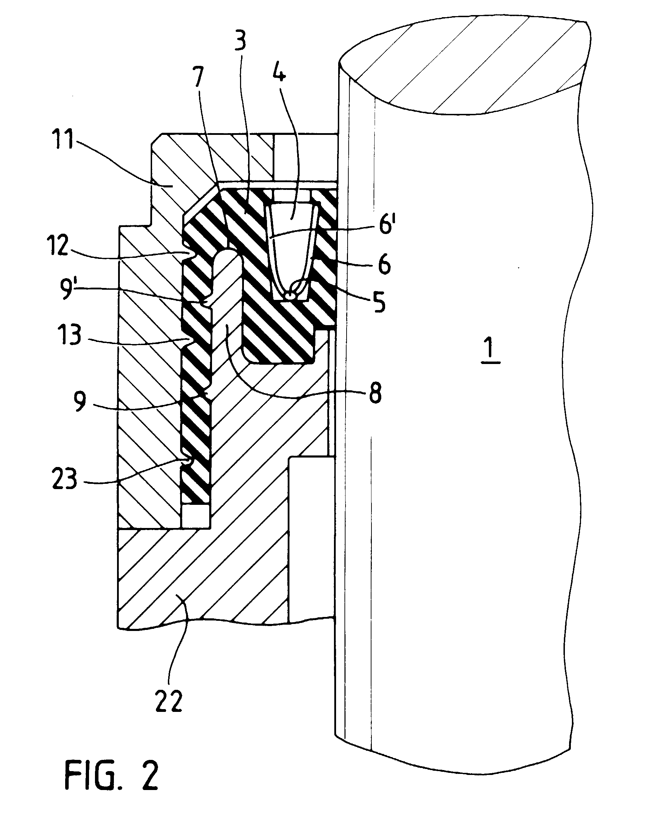

Bei dem in Fig. 1 dargestellten Ausführungsbeispiel ist ferner mit 14 eine Schraube bezeichnet und mit 15 ein C-Ring als weitere Abdichtung, wohingegen bei dem in Fig. 2 dargestellten Ausführungsbeispiel die Vorrichtung mit einer Zylindermantelfläche zusammenwirkt, so daß die Schraube 14 und der C-Ring 15 entfallen können. Anstelle eines Flansches 2 ist hierbei ein Gehäuse 22 vorgesehen.

Bei beiden Ausführungsbeispielen wird also die erwünschte Dichtwirkung in dem angegebenen großen Temperaturbereich dadurch erzielt, daß ein Ring 11 aus einer Metallegierung mit Formgedächtnis-Eigenschaften und mit Einwegcharakteristik durch eine geeignete Erwärmung auf z.B. 80° C zu einer sehr starken Schrumpfung veranlaßt wird. Durch geeignete Wanddickenauslegungen und Materialwahl des Trägerkörpers, d.h., unter Berücksichtigung der zugehörigen Temperaturkoeffizienten wird dabei sichergestellt, daß über den gesamten angegebenen Temperaturbereich die erwünschte hohe Vorspannung erhalten bleibt, wodurch die Dichtschneiden fest in die aus Kunststoff bestehende Dichtung eingedrückt werden.

Prinzipiell kann auch eine Abdichtvorrichtung mittels der bekannten Schrumpfpresspassung realisiert werden, z.B. mit einem aus Aluminium bestehenden Außenring, der den Kunststoffinnenring umgibt. Die dafür erforderliche Temperaturdifferenz zwischen der Erwärmung des Aluminiumrings und der Abkühlung des Innenringes übersteigt jedoch die sog. Glasübergangstemperatur des Dichtungswerkstoffes, so daß nur eine ungenügende Dichtwirkung erzielt wird.

Die erheblichen auf die Dichtung wirkenden vom Ring 11 stammenden Schrumpfkräfte verhindern ein Abgleiten der Dichtung bei den Axialbewegungen der Welle 1. Diese Dichtwirkung wird über viele Jahre beibehalten, so daß auch längere Transportstrecken bzw. größere Lagerzeiträume von Kryo-Ventilen, die mit der erfindungsgemäßen Vorrichtung versehen sind, keine Beeinträchtigung der Dichtwirkung hervorrufen. Sollte nach einem erfolgreichen Weltraumeinsatz oder nach mehrjähriger Lagerdauer eine Dichtung erneuert werden müssen, so ist der Ring 11 aus Metallegierung durch Abdrehen oder Zersägen zu zerstören, wobei jedoch Flanschkörper bzw. Gehäuse unversehrt bleiben und wieder verwendet werden können.

## Patentansprüche

1. Vorrichtung zum Abdichten von metallischen Wellen (1) in Kryo-Ventilen, wobei die Welle koaxial in einem zylindrischen Gehäuse in Axialrichtung verschiebbar angeordnet ist und von einer im wesentlichen ringförmigen Dichtung (3) umgeben ist, aus einem nicht mit Metall verklebbaren Material, dadurch gekennzeichnet, daß die Dichtung (3) von einem konzentrisch zur Welle (1) angeordneten Ring (11) aus einer Metallegierung mit Einweg-Formgedächtnis-Eigenschaften umgeben ist, dessen Innenform an die Außenform der Dichtung angepaßt ist und dessen Kristallgefüge derart angeordnet ist, daß sich bei Überschreiten der Sprungtemperatur der Ring (11) radial zusammenzieht und dadurch die Dichtung (3) kraftschlüssig und formschlüssig mit einem die Welle (1) konzentrisch umgebenden Flansch (2) bzw. mit dem Gehäuse (22) verbindet.

2. Vorrichtung nach Anspruch 1, **dadurch gekennzeichnet,** daß die ringförmige Dichtung (3) eine koaxial zu ihrer Öffnung verlaufende Nut (4) aufweist, in der unter Umständen eine die Nut radial spreizende Feder eingelegt ist.

3. Vorrichtung nach Anspruch 2, **dadurch gekennzeichnet,** daß die Feder aus einem im Boden der Nut (4) angeordneten Federband (5) besteht, das mit beidseits angeordneten, im Abstand voneinander entlang der Nutenwände verlaufenden Federlaschen (6, 6') versehen ist.

4. Vorrichtung nach einem der vorhergehenden Ansprüche, **dadurch gekennzeichnet,** daß der die Dichtung (3) umgebende Ring (11) einen im wesentlichen L-förmigen Querschnitt aufweist, und daß die Innenwand des Ringes (11), die parallel zur Außenwand der Welle (1) an der Außenwand der Dichtung (3) anliegt, mit mehreren Dichtschneiden (12,13) versehen ist.

5. Vorrichtung nach einem der vorhergehenden Ansprüche, dadurch gekennzeichnet, daß der die Welle konzentrisch umgebende Flansch (2) einen konzentrisch zur Welle (1) aufragenden Kragen (8) aufweist, der in eine angepaßte Ausnehmung (7) in der Dichtung (3) eingreift.

6. Vorrichtung nach Anspruch 5, **dadurch gekennzeichnet,** daß die Außenwand des Kragens (8) mit mindestens einer Dichtschneide (9) versehen ist, die im Axialschnitt gesehen, zwischen zwei benachbarten Dichtschneiden (12 und 13) auf der Innenwand des Ringes (11) angeordnet ist.

## Claims

1. Device for sealing metallic shafts (1) in cryo valves, in which the shaft is arranged coaxially in a cylindrical housing so as to be displaceable in the axial direction and surrounded by an essentially annular seal (3), of a material which cannot adhere to metal, **characterised in that** the seal (3) is surrounded by a metal alloy ring (11) with one-way shape-memory characteristics which is arranged concentrically to the shaft (1) and the inner shape of which is matched to the outer shape of the seal and the crystal structure of which is arranged in such a manner that the ring (11) contracts radially on exceeding the jump temperature, thereby aligning and positively connecting the seal (3) with a flange (2) which concentrically surrounds the shaft (1) or with the housing (22).

2. Device according to Claim 1, **characterised in that** the annular seal (3) comprises a groove (4) which extends coaxially to its opening and into which is inserted, if appropriate, a spring which radially expands the groove.

3. Device according to Claim 2, **characterised in that** the spring is composed of a spring band (5), which is arranged in the bottom of the groove (4) which is provided with spring tongues (6, 6') arranged on both sides and at a distance from each other along the groove walls.

4. Device according to one of the above claims, **characterised in that** the ring (11) which surrounds the seal (3) is of essentially L-shaped cross-section, and the inner wall of the ring (11), which abuts the outer wall of the seal (3) parallel to the outer wall of the shaft (1), is provided with a plurality of seal cutters (12, 13).

5. Device according to one of the above claims, **characterised in** that the flange (2) which concentrically surrounds the shaft comprises a collar (8) which protrudes concentrically to the shaft (1) and which engages a matched recess (7) in the seal (3).

6. Device according to Claim 5, **characterised in that** the outside wall of the collar (8) is provided with at least one seal cutter (9) which is arranged between two adjacent seal cutters (12 and 13) on the inner wall of the ring (11), as seen in the axial cross-section.

## Revendications

1. Dispositif pour assurer l'étanchéité d'arbres (1) métalliques de vannes cryogéniques, l'arbre étant monté coaxialement dans un corps cylindrique, avec possibilité de déplacement dans la direction axiale, et étant entouré d'un joint (3) sensiblement annulaire en un matériau qui n'adhère pas au métal, caractérisé par le fait que le joint (3) est entouré d'une bague (11) concentrique à l'arbre (1), en un alliage métallique présentant des propriétés unidirectionnelles de mémoire de forme, dont la forme intérieure est adaptée à la forme extérieure du joint et dont la structure cristalline est telle que, lors du dépassement de la température de changement de forme, la bague (11) se rétracte radialement et lie ainsi, par serrage et par obstacle, le joint (3) à une bride (2) entourant de manière concentrique l'arbre (1) ou au corps (22).

2. Dispositif selon la revendication 1, caractérisé par le fait que le joint (3) annulaire comporte une gorge (4) qui est coaxiale avec son ouverture et dans laquelle est éventuellement placé un ressort à expansion radiale.

3. Dispositif selon la revendication 2, caractérisé par le fait que le ressort est formé d'un ressort-ruban (5) qui est disposé au fond de la gorge (4) et est pourvu de branches (6, 6') élastiques disposées de part et d'autre, à distance les unes des autres, le long des parois de la gorge.

4. Dispositif selon l'une des revendications précédentes, caractérisé par le fait que la bague (11) entourant le joint (3) a une section transversale sensiblement en forme de L, et par le fait que la paroi intérieure de la bague (11) qui est appliquée sur la paroi extérieure du joint (3), parallèlement à la paroi extérieure de l'arbre (1), est pourvue de plusieurs nervures d'étanchéité (12, 13).

5. Dispositif selon l'une des revendications précédentes, caractérisé par le fait que la bride (2) qui entoure l'arbre de manière concentrique comporte un collet (8) concentrique à l'arbre (1), qui pénètre dans un évidement (7) adapté dans le joint (3).

6. Dispositif selon la revendication 5, caractérisé par le fait que la paroi extérieure du collet (8) est pourvue d'au moins une nervure d'étanchéité (9) qui, vu en coupe axiale, est disposée entre deux nervures d'étanchéité (12 et 13) voisines sur la paroi intérieure de la bague (11).
